**Europäisches Patentamt**

**European Patent Office**

**Office européen des brevets**

(11) Veröffentlichungsnummer: **0 437 811 A2**

# EUROPÄISCHE PATENTANMELDUNG

(21) Anmeldenummer: **90125181.9**

(22) Anmeldetag: **24.12.85**

(51) Int. Cl.5: **F23N 1/02, G05D 16/18**

This application was filed on 21.12.1990 as a divisional application to the application mentioned under INID code 60.

(43) Veröffentlichungstag der Anmeldung: **24.07.91 Patentblatt 91/30**

(60) Veröffentlichungsnummer der früheren Anmeldung nach Art. 76 EPÜ: **0 230 477**

(84) Benannte Vertragsstaaten:

**DE FR GB IT NL**

(71) Anmelder: **GASTECHNIC PRODUKTIONS- UND VERTRIEBSGESELLSCHAFT m.b.H.**
**Daimlerstrasse 5 - 7**
**W-7541 Straubenhardt 1 (Feldrennach)(DE)**

(72) Erfinder: **Charton, Jean Claude**
**Rochettes**
**CH-2072 Saint Blaise(CH)**

(54) **Gasdruckregler.**

(57) Ein Gasdruckregler mit einem Servoregler (20) erhält zur Erzeugung eines vorgegebenen Steuerdruckes auf die Reglermembran (29) des Servoreglers eine Steuerdruckmembran (32), die von dem einstellbaren Druck eines steuernden Mediums in einer Steuerdruckkammer beeinflußt wird und über ein starres Verbindungsglied auf die Servoreglermembran einwirkt.

EP 0 437 811 A2

Die Erfindung betrifft einen Gasdruckregler mit einem vom Druck eines gasförmigen Mediums in einer Arbeitskammer gesteuerten Stellglied, mit einem über eine Stelldrucksteuerleitung an die Arbeitskammer angeschlossenen Servoregler, dessen Reglermembran ein Schließglied mit einer von der Reglermembran vorgegebenen Kraft gegen den Ausgang der von dem gasförmigen Medium aus der Arbeitskammer durchflossenen Stelldrucksteuerleitung liegt, und mit einer Steuerdruckeinrichtung, die an der Reglermembran des Servoreglers die vorgegebene Kraft gegen den Ausgang der Stelldrucksteuerleitung erzeugt.

Gasdruckregler zur Regelung des Druckes oder des Flusses eines gasförmigen Mediums enthalten in vielen Fällen einen Servoregler, der dazu dient, den Arbeitsdruck in einer Arbeitsdruckkammer des Gasdruckreglers zu regeln. Über den Druck in der Arbeitsdruckkammer erfolgt dann der Stellvorgang auf das Stellglied des Druckreglers mit erheblich größerer Krafteinwirkung als der von dem Servoregler aufzubringenden Kraft. Damit der Servoregler die Regelung durchführen kann, ist an den Servoregler eine Steuerdruckeinrichtung angeschlossen, die einen Steuerdruck oder eine Steuerkraft auf die Reglermembran des Servoreglers überträgt.

Im einfachsten Fall enthält die Steuerdruckeinrichtung eine Druckfeder, die sich im Gehäuse der Steuerdruckeinrichtung gegen die Membran des Servoreglers abstützt und deren Federdruck die Steuerkraft auf die Membran des Servoreglers darstellt.

Aus der DE-OS 33 45 561 ist es bekannt, diese Feder in einer Einstellschraube zu lagern, die in einem Gewinde des Gehäuses gelagert ist und mit der die Steuerkraft auf die Membran des Servoreglers eingestellt werden kann. Hierdurch wird es möglich, den bekannten Gasdruckregler auf die Regelung eines bestimmten Gasdruckes einzustellen.

Bei einem ebenfalls aus der DE-OS 33 45 561 der Anmelderin bekannten Gasdruckregler ist die sich auf der Membran des Servoreglers abstützende Druckfeder im Anker eines Elektromagneten der an den Servoregler angeflanschten Steuerdruckeinrichtung gelagert. Der elektrische Strom durch die Spule des Elektromagneten bestimmt die Steuerkraft auf die Membran des Servoreglers und damit den Schließdruck des Schließgliedes auf den Ausgang der Stelldrucksteuerleitung von der Stelldruckarbeitskammer des Gasdruckreglers. Das Schließglied gibt den Gasgang der Stelldrucksteuerleitung so lange frei, so lange der Stelldruck in der Stelldruckarbeitskammer größer ist als der Schließdruck des Schließgliedes.

Zur Aufbringung eines bestimmten erforderlichen Schließdruckes benötigt die Spule des Elektromagneten der bekannten Steuerdruckeinrichtung eine erhebliche elektrische Leistung, die nicht nur als störende Wärmeverlustleistung in dem Gasdruckregler auftritt, sondern die auch von dem den Gasdruckregler steuernden Umsetzergerät eine besondere Leistungsstufe zur Aufbringung der geforderten hohen Steuerleistung verlangt.

Der Erfindung liegt die Aufgabe zugrunde, zur Erzeugung des Steuerdruckes oder der Steuerkraft auf die Membran des Servoreglers eines Gasdruckreglers eine Steuerdruckenrichtung bereitzustellen, die eine leichte Anpassung des Steuerdruckes oder der Steuerkraft an vorgegebene Regelbedingungen erlaubt und die keine hohe Steuerleistung erfordert.

Diese Aufgabe wird durch die im kennzeichnenden Teil des Hauptanspruches angegebenen Maßnahmen in vorteilhafter Weise erfindungsgemäß gelöst.

Mit einem erfindungsgemäßen Gasdruckregler ist ohne die Verwendung aufwendiger und damit störanfälliger und die Herstellung des Gasdruckreglers verteuernder Übersetzungsglieder eine Verhältnisregelung in einem weiten Gasdruckbereich möglich.

Die Unteransprüche kennzeichnen besonders vorteilhafte Ausgestaltungen der Erfindung.

Mit den Maßnahmen des Anspruchs 2 ist eine Einstellung des Druckverhältnisses in weiten Grenzen mit einfachen Mitteln möglich.

Die Erfindung wird nachfolgend anhand eines vorteilhaften Ausführungsbeispiels näher erläutert.

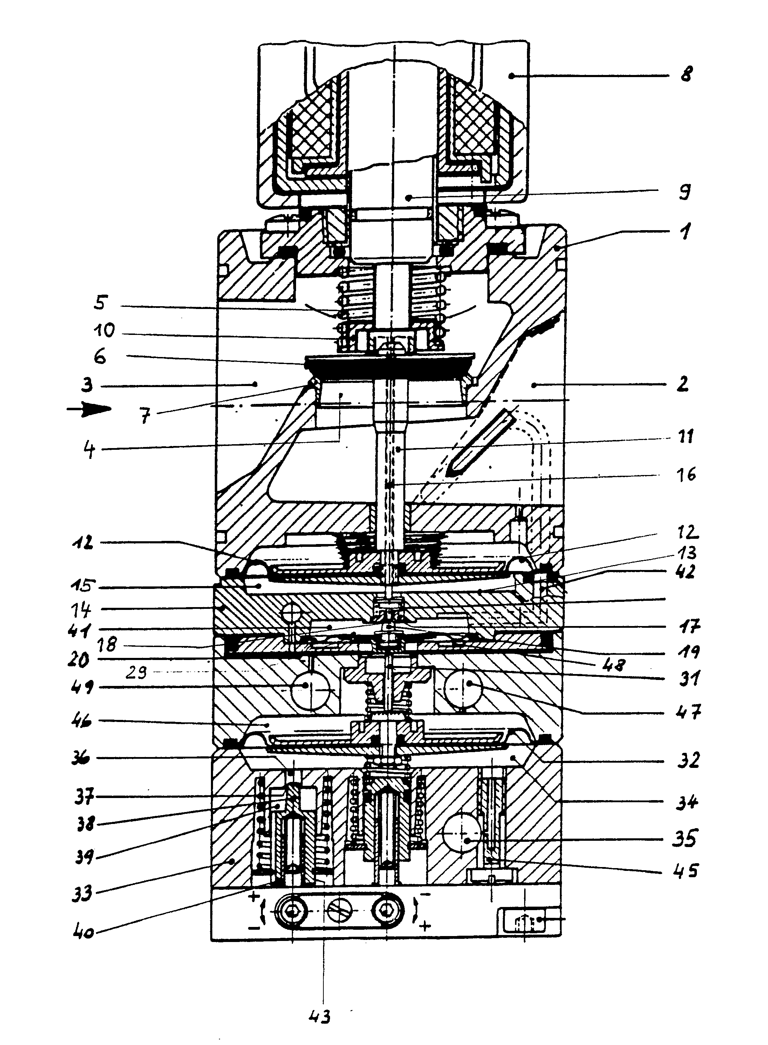

Die Zeichnung zeigt einen Gasdruckregler teilweise im Schnitt dargestellt.

Der Gasdruckregler enthält ein Stellteil 1, das einen Auslaßraum 2 von einem Einlaßraum 3 für ein gasförmiges Medium durch ein Ventil 4 trennt.

Eine Schließfeder 5 preßt den Schließkörper 6 auf einen Ventilsitz 7 des Ventils, so lange ein Elektromagnet 8 für die Ventilbetätigung nicht erregt ist.

Im bestromten Zustand des Elektromagneten 8 ist ein Anker 9 einschließlich eines Federtellers 10 für die Schließfeder 5 angehoben, so daß der Schließkörper 6 von der Schließfeder getrennt ist und über eine an ihm befestigte Stange 11 als Stellglied wirken kann.

An dem anderen Ende der Stange 11 ist eine Arbeitsmembran 12 befestigt, die mit den Wandungen 13 eines Reglergehäuses 14 eine Stelldruckarbeitskammer 15 bildet. In dem von der Schließfeder 5 freigegebenen Zustand ist die Stelldruckarbeitskammer 15 über eine die Stange 11 axial durchsetzende Bohrung 16 mit dem Einlaßraum 3 verbunden.

Gegenüber dem Ende der Stange 11 enthält der Boden der Stelldruckarbeitskammer 15 eine Düse 17, deren Ausgang 18 ein Schließglied 19 eines Servoreglers 20 gegenübersteht.

Auf eine Reglermembran 29 wirkt über ein starres stiftförmiges Verbindungsglied 31 eine Steuerdruckmembran 32 einer an den Servoregler 20 angeschlossenen Steuerdruckeinrichtung 33 ein.

Die Steuerdruckmembran 32 schließt eine Steuerdruckkammer 34 ab, die über eine Steuerdruckleitung 35 mit der Quelle eines Mediums verbunden ist, dessen Druck zur Steuerung des Servoreglers verwendet wird.

Dieses Medium wird der Steuerdruckkammer über eine Düse 45 in der Steuerdruckleitung 35 zugeführt, so daß der Fluß des Mediums in der Druckstelle gedrosselt wird.

Zur Einstellung des Steuerdruckes in der Steuerdruckkammer 34 enthält die Steuerdruckkammer eine Auslaßleitung 36, in deren Öffnung 37 der konisch geformte Dorn 38 eines in einer Bohrung 39 der Steuerdruckeinrichtung 33 geführten Gleitstückes 40 ragt.

Der Dorn bestimmt nach Stellung des Gleitstückes 40 den Querschnitt der Öffnung 37 der Auslaßleitung und damit das Maß des Abflusses des Steuermediums aus der Steuerdruckkammer 34 der Steuerdruckeinrichtung 33.

Der Servoregler 20, dessen Meßdruckkammer 41 im dargestellten Ausführungsbeispiel über eine Druckmeßleitung 42 mit dem Auslaßraum 2 des Gasdruckreglers verbunden ist, stellt zusammen mit der Steuerdruckkammer 34 der Steuerdruckeinrichtung 33 und dem die Servoreglermembran 29 mit der Steuerdruckmembran 32 verbindenden Verbindungsglied 31 einen Verhältnisregler dar, der den Druck im Auslaßraum 2 über den Stelldruck in der Stelldruckarbeitskammer 15 so steuert, daß er mit dem Steuerdruck ein gleichbleibendes Verhältnis bildet.

Der Raum 46 ist über den Anschluß 47 mit der Atmosphäre verbunden. Der Raum 48 ist ebenfalls über einen Anschluß 49 mit der Atmosphäre verbunden. Dieses Verhältnis hängt einerseits vom Verhältnis der wirksamen Flächen der Servoreglermembran 29 und der Steuerdruckmembran 32 und andererseits vom Verhältnis des Zufluß- und Abflußquerschnitts für das steuernde Medium ab. Im dargestellten Ausführungsbeispiel weist die Steuerdruckmembran 32 etwa die 4fach wirksame Fläche der Servoreglermembran 29 aus. Dadurch kann das Verhältnis von Steuerdruck zu Meßdruck etwa zwischen 4 bis nahezu Null an dem Einstellelement 43 der Steuerdruckeinrichtung eingestellt werden.

**Patentansprüche**

1. Gasdruckregler mit einem vom Druck eines gasförmigen Mediums in einer Arbeitskammer gesteuerten Stellglied, mit einem über eine Stelldrucksteuerleitung an die Arbeitskammer angeschlossenen Servoregler, dessen Reglermembran ein Schließglied mit einer von der Reglermembran vorgegebenen Kraft gegen den Ausgang der von dem gasförmigen Medium aus der Arbeitskammer durchflossenen Stelldrucksteuerleitung liegt, und mit einer Steuerdruckeinrichtung, die an der Reglermembran des Servoreglers die vorgegebene Kraft entgegen den Ausgang der Stelldrucksteuerleitung erzeugt,
dadurch gekennzeichnet,
daß die Steuerdruckeinrichtung (33) eine Steuerdruckkammer (34) mit einer Steuerdruckmembran (32) enthält, daß ein starres Verbindungsglied (31) zwischen der Servoreglermembran (29) und der Steuerdruckmembran angeordnet ist, das die Stellkraft der Steuerdruckmembran auf die Servoreglermembran überträgt, daß die Steuerdruckleitung (35) zur Steuerdruckkammer eine Drosselstelle (45) zur Drosselung des Durchflusses des den Steuerdruck erzeugenden Mediums aufweist und daß an die Steuerdruckkammer eine Auslaßleitung (36) angeschlossen ist, deren Auslaßquerschnitt zur Einstellung des auf die Steuerdruckmembran wirkenden Steuerdruckes in der Steuerdruckkammer von einem verstellbaren Einstellelement (43) einstellbar ist.

2. Gasdruckregler nach Anspruch 1,
dadurch gekennzeichnet,
daß die wirksame Fläche der Steuerdruckmembran (32) um ein vorgegebenes Maß größer ist als die wirksame Fläche der Servoreglermembran (29).

3. Gasdruckregler nach Anspruch 1 oder 2,
dadurch gekennzeichnet,
daß das Einstellelement (43) ein in einem Gewinde oder in eine Bohrung (39) des Gehäuses der Steuerdruckeinrichtung (33) konzentrisch zur Auslaßleitung (36) geführtes Gewinde oder Gleitstück ist, das einen an die Auslaßleitung ragenden konischen Dorn (38) enthält.

EP 0 437 811 A2

4